(19) **Europäisches Patentamt**
**European Patent Office**
**Office européen des brevets**

(11) **EP 2 538 341 B1**

(12) **FASCICULE DE BREVET EUROPEEN**

(45) Date de publication et mention
de la délivrance du brevet:
**26.02.2014 Bulletin 2014/09**

(51) Int Cl.:
*G06F 13/374* (2006.01)

(21) Numéro de dépôt: **12173186.3**

(22) Date de dépôt: **22.06.2012**

(54) **Procédé de calcul de la distribution de probabilité de la durée de traversée d'un commutateur de communication multiplexé**

Verfahren zur Berechnung der Wahrscheinlichkeitsverteilung der Übertragungsdauer eines Multiplex-Kommunikationsumschalters

Method for calculating the distribution of probability of the duration of crossing a multiplexed communication switch

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.06.2011 FR 1101935**

(43) Date de publication de la demande:
**26.12.2012 Bulletin 2012/52**

(73) Titulaire: **ONERA (Office National d'Etudes et de Recherches Aérospatiales)
92320 Châtillon (FR)**

(72) Inventeurs:
• **Mauclair, Cédric**
**31400 Toulouse (FR)**
• **Durrieu, Guy**
**31520 Ramonville (FR)**

(74) Mandataire: **Lopez, Frédérique et al
Marks & Clerk France
Immeuble Visium
22 Avenue Aristide Briand
94117 Arcueil Cedex (FR)**

(56) Documents cités:
**EP-A1- 0 421 325**

• **ANANDA BASU ET AL: "Verification of an AFDX Infrastructure Using Simulations and Probabilities", 1 novembre 2010 (2010-11-01), RUNTIME VERIFICATION, SPRINGER BERLIN HEIDELBERG, BERLIN, HEIDELBERG, PAGE(S) 330 - 344, XP019156251, ISBN: 978-3-642-16611-2 * figure 1 * * figure 2 * * alinéa [0003] * * alinéa [0004] * * alinéa [05.1] ***
• **YEQIONG SONG ET AL: "Switched ethernet for real-time industrial communication: modelling and message buffering delay evaluation", FACTORY COMMUNICATION SYSTEMS, 2002. 4TH IEEE INTERNATIONAL WORKSHOP O N AUG 28 - 30, 2002, PISCATAWAY, NJ, USA,IEEE, 28 août 2002 (2002-08-28), pages 27-35, XP010623290, ISBN: 978-0-7803-7586-4**
• **GUREWITS, OMER AND CIDON, ISRAEL: "One-Way Delay Estimation Using Network-Wide Measurements", ACM, 2 PENN PLAZA, SUITE 701 - NEW YORK USA, 30 juin 2006 (2006-06-30), XP040044892,**

**Description**

**Domaine de l'invention**

La présente invention a pour objet un procédé de calcul de la distribution de probabilité de la durée de traversée d'un commutateur de communication multiplexé.

**Etat de l'art**

Les systèmes avioniques récents sont bâtis autour de réseaux de communication multiplexés de type *Avionics Full-DupleX switched Ethernet* (AFDX, voir ARINC 664, partie 7). Ce sont des réseaux de type *Ethernet full-duplex* fiabilisés, développés et standardisés par les industriels de l'aéronautique ; ils équipent des avions comme l'Airbus A380, et le Boeing 787. Conçus pour l'échange de données entre applications critiques du point de vue sûreté de fonctionnement, ils réservent de la bande passante pour chaque flux émetteur de données et leur garantissent une qualité de service (QoS). Ils s'appuient sur l'infrastructure *Ethernet* et une topologie plus ou moins en étoile. Le débit est de 100Mb/s.

Les applications utilisent la notion de liens virtuels (**VL**) pour s'envoyer leurs données. Les VL abstraient la couche physique du réseau — ensembles de câbles entre calculateurs et commutateurs — vers une couche logique — ensembles de liens entre applications. Un VL représente un bus de communication *multicast :* une seule source, plusieurs destinations. Le chemin d'un VL de sa source à sa destination prend la forme d'un arbre. Les trames émises par les VL sont séparées d'un intervalle de temps minimum appelé *période* et leurs tailles (nombre de bits) sont bornées ; ces paramètres dépendent du VL Cette couche logique est équivalente à un réseau de communication de type ARINC 429. L'utilisation de beaucoup moins de câbles est le principal avantage de l'AFDX sur son prédécesseur. Cela entraîne un gain de poids des aéronefs qui est non négligeable.

Cependant, ce nouveau type d'organisation pose des problèmes spécifiques. Les durées de traversée de bout en bout des données qui transitent sur un réseau AFDX ne sont pas déterministes. Or, pour la certification de ces réseaux, il est indispensable d'être capable de borner supérieurement ces durées. Ces bornes doivent être absolues et ne jamais être dépassées dans le cadre du fonctionnement nominal du réseau (c'est-à-dire en l'absence de panne). Elles sont déterminées en calculant la pire durée de traversée des données à travers chaque élément du réseau. Dans la littérature, on retrouve les dénominations suivantes (les abréviations anglo-saxonnes WCTT et WEED sont les plus courantes) :

- en français : pire latence de bout en bout, pire délai de bout en bout et pire durée de traversée,

- en anglais : *Worst Case Transit Time* (WCTT) et *Worst case End-to-End Delay* (WEED).

Si ces bornes « pire cas » permettent aux avionneurs de certifier leurs réseaux, leur pessimisme entraîne une sous-utilisation de ces derniers. Si cette situation devait perdurer, elle conduirait à des limitations opérationnelles du réseau ou à des surcoûts de certification difficilement supportables.

Les trames qui arrivent dans le commutateur sont triées dans des files d'attente selon la priorité de leurs VL sources. Dans ces files, les nouvelles trames sont placées à la fin et les trames sont retirées au début (on parle d'une file en fonctionnement FIFO : première arrivée, première servie).

Lorsque le commutateur est en train d'envoyer/transmettre une trame, il continue jusqu'à ce que l'envoi/le transfert se termine, il n'y a pas de préemption. Tant qu'il y a des trames à transmettre, le commutateur sélectionne la première trame de la file d'attente avec la priorité la plus élevée pour la transmettre. Si cette file est vide, il sélectionne la file suivante, et ainsi de suite jusqu'à ce que toutes les files soient vides. La durée de traversée d'un commutateur par une trame est égale au laps de temps pendant lequel la trame attend dans sa file d'attente plus la durée de transmission de la trame sur le réseau. Cette durée de transmission dépend de la taille de la trame et du débit en sortie du commutateur.

Dans le contexte des réseaux AFDX, beaucoup de paramètres sont connus et déterministes comme le débit du réseau, la taille d'une trame, sa durée de transmission, etc. Les phénomènes non déterministes se résument notamment aux déphasages entre les premières trames émises par les VL et à la durée d'attente des trames dans leurs files d'attente en cas de contention. Le procédé de l'invention traite du second phénomène.

Il existe principalement deux approches pour calculer les WEED sur un réseau lors de son fonctionnement nominal : le *calcul réseau* et la *méthode des trajectoires.* Il existe une troisième catégorie beaucoup moins employée dans la pratique : les approches énumératives. Elles s'appuient sur des techniques issues du *« model-checking »* et l'exploration exhaustive d'espaces d'états. En théorie, elles permettent de connaître l'ensemble des couples durée de traversée du réseau/fréquence d'apparition pour chaque VL.

*Calcul réseau*

La théorie du calcul réseau (*network calculus*) a été proposée par R.L. Cruz dans les années 1990 [R.L. Cruz, A calculus for network delays I & II, IEEE Transaction on Information Theory, 1991]. Ses deux objectifs étaient les suivants :

- évaluer la taille minimale que devaient avoir les mémoires tampons des éléments d'un réseau pour ne perdre aucune trame ;

- calculer le laps temps maximal pendant lequel les trames pouvaient rester dans les files d'attente de ces tampons.

La démarche consiste à affecter une *courbe d'arrivée maximale* à chaque VL et une *courbe de service minimale* à chaque élément du réseau (émetteurs des VL et commutateurs). Les bornes « pire cas » et les tailles maximales des files d'attente s'expriment dans une algèbre « min-plus » (celle du calcul réseau) au moyen de ces courbes.

Les courbes d'arrivée caractérisent le trafic généré par un VL et les courbes de service représentent ce que le commutateur peut envoyer compte tenu de ce qu'il est déjà en train d'envoyer. Ces courbes sont des approximations, vers le haut et le bas respectivement, du comportement de ce qu'elles modélisent et cela conduit à des résultats de durées de traversée conservatifs et adaptés aux besoins d'une démarche de certification. Dans la pratique cependant, les valeurs des bornes sont souvent trop conservatives (on dit aussi pessimistes) et ne reflètent plus une réalité d'utilisation.

*Méthode des trajectoires*

La théorie en a été proposée par S. Martin dans son mémoire de thèse en 2004 [S. Martin, Maîtrise de la dimension temporelle de la qualité de service dans les réseaux, Université Paris XII, 2004]. Elle s'appuie sur l'analyse holistique, proposée par Tindell et Clark en 1994 [K. W. Tindell and J. Clark, Holistic Schedulability Analysis for Distributed Hard Real-Time Systems, Euromicro Journal - Special Issue on Parallel Embedded Real-Time Systems, 1994], qui est une analyse d'ordonnançabilité pour des systèmes fonctionnant en temps réel, distribués, pour lesquels les tâches communiquent par passage de messages. Il s'agit de trouver un temps de réponse dans le pire cas pour un ensemble de tâches distribuées. Le temps de réponse d'une tâche dans une chaîne de transactions constitue une gigue d'activation pour la suivante, qu'il faut majorer.

La méthode des trajectoires cherche à ne considérer que les pires cas *réalistes,* c'est-à-dire les scénarios d'ordonnancement pouvant réellement se produire lors de l'exécution du système, ils sont appelés trajectoires. L'élaboration d'une borne pire cas sur le retard de bout en bout se fait à partir de ces trajectoires. Cette façon d'écarter le maximum de scénarios impossibles améliore sensiblement les bornes calculées et les rapproches de véritables *maxima* observés.

Plus récente et moins pessimiste (dans la plupart des cas) que le calcul réseau, cette approche connaît un intérêt croissant de la part des avionneurs et des équipementiers.

*Approches énumératives*

L'utilisation du *model checking* temporisé a été envisagée pour la vérification de propriétés de systèmes embarqués distribués [F. Carcenac, F. Boniol and Z. Mammeri, Verification of an Avionic System Using Timed Model Checking, IsoLA - First International Symposium on Leveraging Applications of Formal Methods, 2004]. Les ressources de communication sont modélisées sous forme de système à files d'attente déterministes avec tampons de tailles bornées (en utilisant le formalisme des automates temporisés). La vérification s'effectue en utilisant des *model checkers* comme UPPAAL [T. Amnell et al., UPPAAL: now, next, and future, Springer-Verlag New York, Inc. - Modeling and verification of parallel processes, 2001] ou SMV [K.L. McMillan, Symbolic Model Checking, Kluwer Academic Publ., 1993] par exemple.

En théorie, il s'agit de la seule méthode capable de calculer les bornes pire cas exactes. Dans la pratique cependant, l'explosion combinatoire de l'espace d'états à explorer rend inabordable le traitement direct de systèmes réalistes. Il faut alors recourir à des abstractions qui peuvent porter préjudice à la précision (nombre de propriétés qualitatives restent néanmoins vérifiables) [F. Carcenac, Une méthode d'abstraction pour la vérification des systèmes embarqués distribués : application à l'avionique, École Nationale Supérieure de l'Aéronautique et de l'Espace, 2005].

Dans la pratique, l'explosion combinatoire des approches énumératives contraint à utiliser des modèles trop simplifiés des réseaux AFDX. De fait, les bornes calculées par ces méthodes sont aussi pessimistes et pour l'heure, il n'est pas possible de calculer des bornes non pessimistes autres que pour des systèmes très simples à l'aide de ces approches.

**EP 2 538 341 B1**

**Résumé de l'invention**

La présente invention a pour objet un procédé de calcul de durée de traversée d'un commutateur de communication multiplexé par une trame d'un lien virtuel (désigné également ci-après par VL) qui soit déterministe et permette de calculer la distribution de probabilité des durées de traversée dans son ensemble, et en particulier son maximum.

Dans le contexte des réseaux avioniques, et en particulier dans celui de l'AFDX, beaucoup de paramètres sont parfaitement connus et déterministes, par exemple la durée de transmission d'une trame de taille connue, la durée du traitement d'une trame dans un commutateur, etc. Les phénomènes non déterministes se résument au temps d'attente des trames dans une file d'attente en cas de contention. Dans cette démarche, seule la combinatoire conduisant aux temps d'attente maximaux est caractérisée.

Selon le procédé de l'invention, les états possibles de la file d'attente sont regroupés en macro-états, de sorte que chaque macro-état corresponde à un temps d'attente différent de la classe de trame considérée. L'utilisation des macro-états et de l'instant de l'arrivée des trames permet, pour un coût moindre que selon l'état de l'art, de suivre l'évolution du taux de remplissage de la file et donc le temps que les trames restent dans cette file

Plus précisément, le procédé de l'invention est un procédé d'estimation déterministe de la distribution de probabilité, pour un intervalle de temps considéré, des durées de traversée, par une trame d'un lien virtuel considéré, d'un commutateur de communication multiplexé à une seule file d'attente FIFO (First In First Out) d'un réseau de communication, plusieurs liens virtuels indépendants les uns des autres arrivant à la file d'attente dudit commutateur, la taille de la mémoire tampon associée à ladite file d'attente étant supérieure ou égale aux besoins, les périodes d'émission de trames de chaque lien virtuel et les durées de transmission de ces trames par ledit commutateur étant constantes, ces constantes pouvant être différentes d'un lien virtuel à un autre, caractérisé en ce qu'il comporte l'étape suivante :

100 : Classement desdites trames en classes d'équivalence selon leur durée de transmission, chaque trame d'une classe d'équivalence étant alors une trame équivalente pour ladite classe.

Selon un mode de réalisation avantageux, le procédé de l'invention comporte en outre les étapes suivantes :

200 : Calcul de la table des motifs, cette étape comprenant les sous-étapes suivantes :

1. 230 : génération de l'ensemble des n-uplets constitués des nombres de trames de chaque classe d'équivalence pouvant arriver à un instant quelconque dans la file d'attente dudit commutateur, chaque n-uplet, appelé motif, formant une ligne d'un tableau appelé « table des motifs »,
2. 270 : calcul, pour chaque motif, de sa durée de transmission totale,

300 : Calcul de la ligne du temps définie comme étant une séquence de triplets (date, trames arrivées à ladite date, backlog avant l'arrivée des trames à ladite date), où les dates sont tous les instants considérés où arrive au moins une trame dans ledit commutateur, ces instants étant compris dans l'intervalle de temps considéré d'une durée égale au PPCM (Plus Petit Commun Multiple) desdites périodes, et où le backlog est défini comme étant la durée restante nécessaire pour transmettre l'ensemble des trames encore présentes dans ladite file d'attente juste avant ladite date, et pour chacune des dates listées dans la ligne du temps on effectue les étapes 400 à 800 :

400 : Détermination du motif maître principal de la date considérée, défini comme étant le motif de la table des motifs correspondant aux trames arrivées à ladite date, et pour chaque classe d'équivalence représentée dans le motif maître principal on effectue les étapes 500 à 800 :

500 : Sélection d'une trame équivalente et considération du motif maître par rapport à cette trame équivalente sélectionnée, le motif maître considéré étant égal au motif maître principal dont la composante de la classe d'équivalence de ladite trame équivalente sélectionnée est diminuée d'une unité,

600 : Détermination des motifs esclaves par rapport à la trame équivalente sélectionnée et au motif maître considéré, les motifs esclaves étant des sous-ensembles dudit motif maître considéré, chaque sous-ensemble représentant un cas différent de positionnement devant la trame équivalente sélectionnée, dans ladite file d'attente, de trames équivalentes dudit motif maître considéré,

700 : Calcul, à l'aide de la ligne du temps et de la table des motifs, de la distribution de probabilité, pour la date considérée, des durées de traversée par la trame équivalente sélectionnée, chacune de ces durées, en abscisse de ladite distribution, valant pour un motif esclave donné et se calculant en ajoutant à la durée d'attente associée

**4**

au backlog, la somme des durées de transmission des trames dudit motif esclave (c'est-à-dire sa durée totale de transmission) et la durée de transmission de ladite trame équivalente sélectionnée, chacune des probabilités, en ordonnée de ladite distribution, étant égale à la probabilité dudit motif esclave connaissant ladite trame équivalente sélectionnée,

800 : Calcul, pour chaque lien virtuel dont les trames sont de la classe d'équivalence considérée, de la distribution de probabilité, pour la date considérée, des durées de traversée par une trame d'un lien virtuel considéré, chacune de ces distributions de probabilité étant égale à celle calculée à l'étape 700,

900 : Calcul, pour chaque lien virtuel, de la distribution de probabilité, pour l'intervalle de temps considéré, des durées de traversée par une trame d'un lien virtuel considéré, en faisant la somme, sur toutes les dates de l'intervalle de temps considéré, des distributions de probabilité, pour la date considérée, des durées de traversée par une trame d'un lien virtuel considéré pondérées par l'inverse du nombre total de trames dudit lien virtuel considéré reçues dans la file d'attente dudit commutateur pendant l'intervalle de temps considéré.

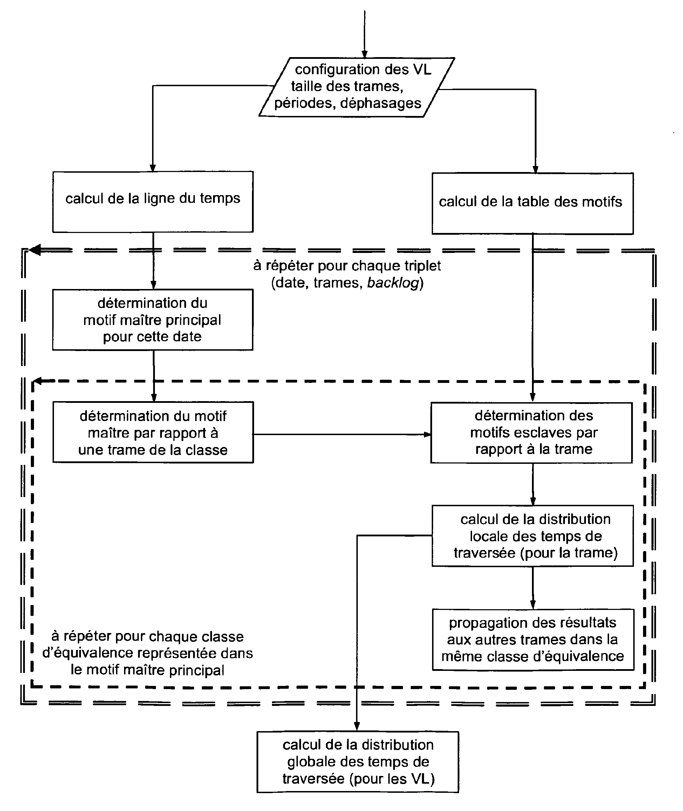

**Brève description de la figure**

La présente invention sera mieux comprise à la lecture de la description détaillée d'un mode de réalisation, pris à titre d'exemple non limitatif et illustré par le dessin annexé, sur lequel :

- la figure unique est un diagramme résumant les principales étapes du procédé de l'invention.

**Description détaillée de l'invention**

Le procédé de l'invention utilise l'existence de caractéristiques communes entre les trames des VL afin de réduire l'espace des états d'une file d'attente. Il s'apparente en cela à un procédé de compression et décompression, basé sur l'exploitation de caractères communs permettant de réduire la combinatoire en ne considérant que les caractères distincts. De cette manière, le procédé tire parti des caractéristiques des VL pour le stockage compact des états en mémoire. Il permet d'appliquer une méthode énumérative et exhaustive à des configurations plus importantes, ce qui était impossible dans la pratique antérieure.

Le procédé de l'invention part des hypothèses suivantes : plusieurs VL indépendants sont émis vers une seule file d'attente et la période de chaque VL est constante (intervalle entre deux trames consécutive du VL), de même que la durée de transmission de ses trames. Cela correspond au cas où il n'y a qu'une seule priorité. D'autre part, les tampons sont supposés de taille infinie. La vérification qu'il n'y a pas de dépassement doit être faite *a posteriori* et ne fait pas partie de l'invention. On rappelle que la source d'un VL est toujours identifiable de façon unique (bus de communication *multicast*).

Pour mettre en oeuvre l'invention, on considère que les trames qui sont prêtes à être envoyées sont placées à la fin d'une file d'attente. Dès que le réseau est disponible, la première trame de la file est envoyée. Le réseau sera de nouveau disponible lorsque cette trame aura été envoyée. S'il y a plusieurs priorités, les trames sont réparties en fonction de la priorité de leurs VL émetteurs et la trame qui est choisie pour être envoyée est celle avec la priorité la plus élevée à ce moment. On rappelle que le procédé de l'invention ne prend en compte qu'une seule priorité, donc une seule file d'attente. La combinatoire qui intervient dans le calcul du laps de temps passé au sein du commutateur provient de l'ordre dans lequel sont rangées les trames dans les files d'attente lorsque plusieurs d'entre elles arrivent simultanément. Pour des raisons physiques liées à l'accès séquentiel des mémoires tampon utilisées, il est impossible de placer deux trames simultanément dans une file de sortie (interdiction d'écrire simultanément en mémoire deux informations). Dans l'industrie, une lecture circulaire des tampons d'entrée est courante. Il est alors impossible de prévoir a priori devant quel tampon se situera la tête de lecture lors de l'arrivée simultanée de plusieurs trames. Ainsi, pour un groupe de trames qui arrivent simultanément dans un élément du réseau, il est impossible de prévoir l'ordre dans lequel elles seront placées dans les files d'attente en sortie du commutateur.

Si l'on souhaite calculer le laps de temps pendant lequel une trame T reste dans la file avant d'être envoyée, il faut compter les fois où elle est placée la première, la deuxième, etc. Il faut également prendre en compte qu'à son arrivée, d'autres trames étaient peut-être déjà dans sa file d'attente. Si *n* trames doivent être placées dans la file, il existe *n!* façons de le faire. Cependant, nombre de ces états (la séquence des *n* trames dans la file) sont identiques du point de vue de ce que l'on cherche à calculer : le laps de temps mis par une trame pour traverser sa file d'attente (c'est-à-dire, le commutateur). Cette durée de traversée est égale au laps de temps pendant lequel la trame attend dans la file (*backlog* plus trames arrivées en même temps et placées devant elle) plus sa durée de transmission sur le réseau.

Prenons un exemple simple et considérons les trames A, B et T qui arrivent en même temps dans un commutateur. Elles ont la même priorité et vont donc dans la même file d'attente. Pour simplifier l'exemple, supposons de plus qu'aucune autre trame n'a été ou ne sera envoyée par la suite, si bien que la file est vide quand les trames arrivent. On note entre crochets les trames qui arrivent en même temps dans la file d'attente. Puisque les trames ne peuvent plus se doubler une fois qu'elles sont placées dans la file, l'agencement de trames arrivées avant n'a pas d'importance pour les trames futures. La notation crochet ne représente pas un cliché de la file d'attente, seulement un groupe de trames arrivées ensemble. Il est coûteux en temps de calcul de représenter l'ensemble des états possibles de la file d'attente à un instant donné à cause dudit problème d'explosion combinatoire. En revanche, l'utilisation de macro-états et de l'instant de l'arrivée de ces trames permet de suivre l'évolution du taux de remplissage de la file et donc le laps de temps pendant lequel les trames restent dans cette file pour un coût de calcul raisonnable.

On s'intéresse au laps de temps pendant lequel la trame T peut rester dans le commutateur avant d'être transmise. Cette durée peut prendre les valeurs suivantes :

- *0* pour les états de la file d'attente [TAB] et [TBA] ;

- la durée de transmission de la trame A pour l'état [ATB] ;

- la durée de transmission de la trame B pour l'état [BTA] ;

- les durées de transmission des trame A et B pour les états [ABT] et [BAT].

Si on utilise la notation { } pour désigner un ensemble de trames, quel que soit leur ordre relatif, on peut noter [T{AB}], [ATB], [BTA] et [{AB}T] les 4 macro-états qui représentent les 6 états [TAB], [TBA], [ATB], [BTA], [ABT] et [BAT].

On peut même avoir une notation indépendante de la trame concernée, que l'on appelle motif, si l'on adopte une notation où T et toutes les trames après elle ne sont pas représentées, on a pour T [], [{A}], [{B}] et [{AB}]. On donne une autre représentation possible des motifs plus loin. D'autre part, les motifs pour l'étude du temps d'attente des trames A et B sont respectivement [], [{B}], [{T}], [{BT}] et [], [{A}], [{T}]. [{AT}]. En tout, il existe *7 motifs* distincts — [] (la trame considérée est la première), [{A}] [{B}] et [{T}] (la trame considérée est la deuxième), et [{AB}] [{BT}] et [{AT}] (la trame considérée est la troisième). Ils permettent de reconstituer les *3x3! = 18* états nécessaires au calcul des durées de traversée de chacune des trames. Certains de ces états sont les mêmes, on évite donc aussi de recalculer plusieurs fois les mêmes états. Ces motifs sont suffisants pour le calcul de toutes les durées de traversée des trois trames : qu'elles soient placées les premières, les deuxièmes ou les troisièmes dans la file d'attente en cas d'arrivées simultanées.

De plus, si A et B par exemple ont la même durée de transmission, le nombre de motifs est plus petit car A et B sont équivalentes et [{A}]-[{B}] ainsi que [{AT}] - [{BT}]. Il reste alors seulement 5 motifs.

Cela a été négligé dans les paragraphes précédents, mail il faut en outre prendre en compte le fait que la file peut ne pas être vide lors de l'arrivée de nouvelles trames. Pour cela, on garde en mémoire la durée nécessaire au traitement de toute la file d'attente à tous les instants d'arrivée de nouvelles trames (les autres ne sont pas intéressants), c'est le « backlog ». Le backlog représente un arriéré de données non encore envoyé. Il se calcule de proche en proche à partir de la durée totale de transmission des motifs. Si l'on note $W_n$ la durée totale de transmission du motif à l'instant $t_n$ (c'est-à-dire la durée totale de transmission des trames arrivées à l'instant $t_n$), alors le backlog $B_n$ s'exprime pour tout n supérieur à 1 :

$$B_n = max(0,\ B_{n-1} + W_{n-1} - (t_n - t_{n-1})) \qquad\qquad Equation\ 1$$

avec

$$B_0 = 0 \text{ et } t_0 = 0.$$

L'arriéré ne peut être que positif ou nul. Cette valeur s'ajoute aux latences calculées pour le groupe de trames nouvellement arrivées.

Les trames sont regroupées en *classes d'équivalences* selon leurs durées de transmission. Ensuite, on génère ce que l'on appelle la *table des motifs* et qui regroupe l'ensemble des motifs comme [{AT}] dans l'exemple précédent, à l'aide d'une représentation adaptée. De cette table, il est très facile de calculer les différents temps d'attente de toutes les trames transitant par l'élément du réseau ainsi que leurs fréquences associées.

Si l'on note n le nombre de trames différentes (A, B, T, ...), *k* le nombre de durées de transmission différentes et $C_i$ le nombre de trames ayant la durée de transmission numéro i, alors il existe *(C_1+1) × ... × (C_k+1)* motifs différents. Ce nombre correspond au nombre de lignes de la table des motifs où chaque colonne peut prendre les valeurs de *0* à

$C_i$, soit $Ci+1$ valeurs. Il est à mettre en relation avec le nombre d'états $n!$ : pour chaque trame différente, il y a $n!$ permutations possibles de toutes les trames (états de la file d'attente). Cela porte le nombre total d'états à considérer à $n \times n!$. Cependant, les arrangements sont tous les mêmes et seule la trame considérée change. Finalement, il n'y a que $n!$ états différents

Prenons un exemple avec huit VL qui envoient régulièrement des trames dans une même file d'attente d'un commutateur :

- un des VL envoie une trame toutes les *100* secondes, la durée de transmission d'une trame est égale à *10* secondes (1: 10, 100) ;
- trois des VL envoient une trame toutes les *200* secondes, la durée de transmission d'une trame est égale à *10* secondes (3: 10, 200) ;
- un des VL envoie une trame toutes les *60* secondes, la durée de transmission d'une trame est égale à *4* secondes (1: 4, 60) ;
- un des VL envoie une trame toutes les *30* secondes, la durée de transmission d'une trame est égale à *4* secondes (1: 4, 30) ;
- un des VL envoie une trame toutes les 30 secondes, la durée de transmission d'une trame est égale à *5* secondes (1: 5, 30) ;
- un des VL envoie une trame toutes les *8* secondes, la durée de transmission d'une trame est égale à *1* seconde (1: 1, 8).

Le premier nombre désigne le nombre de VL concernés par les caractéristiques énoncées après ; le second désigne la durée de transmission d'une trame ; le troisième désigne la période (intervalle séparant l'arrivée de deux trames consécutives issues d'un même VL). On note de façon abrégée : S = { (1: 10, 100) (3: 10, 200) (1: 4, 60) (1: 4, 30) (1: 5, 30) (1: 1, 8) }.

Dans cet exemple, $k = 4$ et pour la durée de transmission égale à 10, $C_i = 4$, la durée de transmission égale à 4, $C_2 = 2$, la durée de transmission égale à 5, $C_3 = 1$ et la durée de transmission égale à 1, $C_4 = 1$. Les classes ont été *arbitrairement* rangées par ordre de cardinalité et de durées de transmission décroissantes. La table des motifs contient *60* lignes et permet de représenter, de façon pertinente et efficace pour le calcul qui nous intéresse, les *8! = 40320* séquences différentes possibles des 8 trames pouvant arriver à un instant donné. Rappelons que la fonction factorielle croît très rapidement : le nombre *15!* comporte déjà *13* chiffres (à titre de comparaison, *1* milliard en compte seulement *10*).

La table des motifs énumère :

■ les motifs possibles, c'est-à-dire le nombre de trames de chaque classe d'équivalence (durée de transmission) pouvant arriver dans la file d'attente du commutateur considéré à un instant quelconque compris dans l'intervalle de temps considéré ( soit l'intervalle *[max($r_i$) + PPCM($T_i$) ; max($r_i$) + 2-PPCM($T_i$)[* défini plus loin),

■ leur taille (nombre de trames dans le motif),

■ leur durée de transmission totale (somme des durées de transmission des trames du motif).

Le terme $c_i$ (en minuscule), compris entre *0* et $C_i$ (en majuscule), désigne combien de trames dont la durée de transmission est le numéro *i* sont contenues dans le motif. La table est triée selon la taille des motifs dans l'ordre croissant, puis par $c_1$ croissant, puis $c_2$ croissant, etc. Ce tri facilite en partie la recherche des motifs esclaves d'un motif maître. Tous les motifs de taille inférieure ou égale à la taille d'un motif maître sont potentiellement des motifs esclaves (voir ci-dessous l'exposé du calcul).

**Tableau 1- Table des motifs pour l'exemple proposé (extrait)**

| n° du motif | $C_1$ | $C_2$ | $C_3$ | $C_4$ | taille du motif | durée de transmission totale du motif |
|---|---|---|---|---|---|---|
| 1 | *0* | *0* | *0* | *0* | *0* | *0* |
| 1 | *n* | *0* | *0* | *1* | *1* | *1* |
| 3 | *0* | *0* | *1* | *0* | *1* | *5* |
| 4 | *0* | *1* | *0* | *0* | *1* | *4* |
| 5 | *1* | *0* | *0* | *0* | *1* | *10* |
| 6 | *0* | *0* | *1* | *1* | *2* | *6* |
| 7 | *0* | *1* | *0* | *1* | *2* | *5* |

(suite)

| n° du motif | $C_1$ | $C_2$ | $C_3$ | $C_4$ | taille du motif | durée de transmission totale du motif |
|---|---|---|---|---|---|---|
| 8 | 0 | 1 | 1 | 0 | 2 | 9 |
| 9 | 0 | 2 | 0 | 0 | 2 | 8 |
| 10 | 1 | 0 | 0 | 1 | 2 | 11 |
| 11 | 1 | 0 | 1 | 0 | 2 | 15 |
| 12 | 1 | 1 | 0 | 0 | 2 | 14 |
| 13 | 2 | 0 | 0 | 0 | 2 | 20 |
| 14 | 0 | 1 | 1 | 1 | 3 | 10 |
| | | | | | | |
| 59 | 4 | 2 | 1 | 0 | 7 | 53 |
| 60 | 4 | 2 | 1 | 1 | 8 | 54 |

La ligne du motif *59,* par exemple, signifie que quatre trames dont la durée de transmission est de *10* secondes (c'est-à-dire de la classe 1), deux trames dont la durée de transmission est de *4* secondes (c'est-à-dire de la classe 2) et qu'une trame dont la durée de transmission est de *5* secondes (c'est-à-dire de la classe 3) composent ce motif. L'ordre n'est pas indiqué et n'est pas utile pour les calculs du temps d'attente dans la file, il ne l'est que pour le calcul de sa pondération. Voyons ces calculs pour cet exemple.

Afin d'obtenir la distribution complète des probabilités des durées de traversée du réseau, il faut en théorie les calculer pour une infinité de trames. L'hypothèse des périodes constantes des VL (voir ci-dessus les hypothèses de départ) permet de réduire l'étude à un nombre fini de trames : celles qui arrivent dans la file d'attente dans un intervalle de durée égale au plus petit commun multiple (PPCM) des périodes des VL (notés $T_i$ pour le VL $i$). De plus, si on note $r_i$ la date d'arrivée de la première trame du VL $i$ dans la file d'attente du commutateur, la littérature [A. Choquet-Geniet et E. Grolleau, Minimal schedulability interval for real-time systems of periodic tasks with offsets, Theoretical Computer Science volume 310, n° 1-3, pages 117-134, Elsevier Science Publishers Ltd., 2004] assure que les arrivées sur l'intervalle *[max(r$_i$) + PPCM(T$_i$) ; max(r$_i$) + 2-PPCM(T$_i$)[* se répètent à l'infini. On peut donc omettre les arrivées entre 0 et *max(r$_i$) + PPCM(T$_i$)* pour le calcul dont le poids est négligeable face aux autres arrivées (puisque les autres se répètent à l'infini).

On ne s'intéresse qu'aux instants dans l'intervalle *[max(r$_i$) + PPCM(T$_i$) ; max(r$_i$) + 2-PPCM(T$_i$)[* où au moins une trame arrive dans la file d'attente et on calcule toutes ces dates prévisionnelles d'arrivée de trames avant d'effectuer les calculs des durées de traversée. Pour chacun de ces instants, on relève les trames arrivées et on calcule le *backlog* à cet instant (durée d'attente dans la file d'attente, sans prendre en compte les nouvelles trames, cf équation 1). On parle informellement de la *ligne du temps (du calcul).* Cette ligne du temps est donc une suite de triplets (date, trames arrivées, *backlog).* Le calcul *a priori* de ces triplets permet de répartir les calculs sur différents coeurs ou différents ordinateurs et de profiter au mieux de la parallélisation des calculs par exemple.

Pour illustrer le procédé de l'invention, nous allons calculer les temps d'attente que la trame du VL 1, qui arrive à l'instant *t = 900s,* peut rencontrer dans le cas où une trame de chaque VL arrive dans le commutateur à l'instant t = 0, qualifié d*'instant initial (r$_i$ = 0* pour tout VL *i).* L'intervalle d'étude est *[600 ; 1200[* dans ce cas.

Compte tenu de l'intervalle qui sépare deux arrivées successives de trames issues d'un VL et du fait qu'une trame de chaque VL est arrivée à l'instant initial t = 0, au temps *t = 900s,* il arrive quatre trames dans le commutateur. Il y a une trame issue du VL 1, une trame issue du VL 5, une trame issue du VL 6 et une trame issue du VL 7. Ces trames sont appelées respectivement trame 1, 5, 6 et 7. D'autre part, un calcul du *backlog* à cet instant montre qu'il est nul.

Le motif correspondant à cette arrivée est donc [{1567}] avec les notations précédentes. Cependant, on utilise préférablement la notation plus compacte issue d'une lecture directe de la table [1, 2, 1, 0]. En effet, elle permet de rendre compte de plusieurs motifs. On appelle ce motif le *motif maître principal.* On définit le motif maître par rapport à la trame 1 en retirant *1* à la classe de la trame dans le motif maître principal, soit [0, 2, 1, 0]. À partir de ce motif maître particulier, on détermine l'ensemble des motifs esclaves qui correspondent aux différentes places que la trame 1 pourrait occuper dans la file d'attente.

- Lorsque la trame 1 est placée la première, cela correspond au motif de taille nulle [0, 0, 0, 0] qui correspond lui-même au macro-état [1{567}]. Toutes les autres trames sont placées derrière la trame 1.

- Lorsque la trame 1 est placée la deuxième, il y a une trame devant elle. On recense les motifs de taille 1 depuis le motif maître. Le motif [0, 1, 0, 0] correspond au macro-état [{5}1{ 67}] où la trame 5 est placée avant la trame 1 ainsi qu'au macro-état [{6}1{57}] où la trame 6 est placée avant la trame 1. Le motif [0, 0, 1, 0] correspond au macro-état [{7}1{56}] où c'est la trame 7 qui est placée avant la trame 1.

- Lorsque la trame 1 est placée la troisième, il y a deux trames devant elle : [0, 1, 1, 0] correspond aux macro-états [{57}1{6}] et [{67}1{5}], et [0, 2, 0, 0] correspond au macro-état [{56}1{7}].

- Lorsque la trame 1 est placée la dernière, il y a trois trames devant elle : [0, 2, 1, 0] correspond au macro-état [{567}1].

On aurait pu imaginer les règles suivantes pour ranger les trames dans un ordre précis dans la file d'attente : plus petit numéro d'abord, plus petit temps d'exécution d'abord, plus petit intervalle entre deux trames d'abord, etc. Cependant, comme précédemment évoqué, il n'est pas possible de connaître l'ordre dans lequel les trames seront placées dans la file. Il faut donc calculer tous les temps d'attente possibles et prendre en compte la multiplicité des différentes solutions pour le calcul de leurs probabilités. Sur un horizon du temps infini, on préfère parler des fréquences des temps d'attente que de leurs probabilités.

Pour chacun des motifs identifiés — [0, 0, 0, 0], [0, 1, 0, 0], [0, 0, 1, 0], [0, 1, 1, 0], [0, 2, 0, 0] et [0, 2, 1, 0] — il faut calculer le nombre de séquences qu'il représente en fonction du motif maître, c'est-à-dire son *poids.* Le dénombrement se fait comme suit :

1. dénombrement du nombre de façons de sélectionner les trames du motif esclave parmi celles du motif maître (pour rappel, ces trames sont celles qui sont placées *avant* la trame 1 dans la file d'attente). Par exemple, il y a deux façons de sélectionner une trame parmi deux pour le motif esclave [0, 1, 0, 0] étant donné le motif maître [0, 2, 1, 0] puisque $C_2=2$ et $c_2=1$ ;

2. dénombrement du nombre de choix dans l'ordre des trames du motif esclave. Par exemple, il y a $(\sum c_i)!$ ordres possibles, soit *3*! pour le motif esclave [0, 2, 1, 0] ;

3. enfin, dénombrement du nombre de choix dans l'ordre des trames du motif maître qui ne sont pas dans le motif esclave (ces trames sont celles qui sont placées *après* la trame 1 dans la file d'attente). Par exemple, il y a *2*! ordres possibles pour le motif esclave [0,0, 1,0] étant donné le motif maître [0, 2, 1, 0].

Les résultats (partiels) sont récapitulés dans le tableau 2 ci-dessous. Ces résultats concernent uniquement la trame 1, au temps *t = 900s* dans l'hypothèse où une trame de chaque VL est arrivé dans la file d'attente à l'instant initial *t = 0*. Il faut ensuite propager les résultats aux autres trames de la même classe d'équivalence, et répéter l'ensemble de ces opérations pour chaque classe d'équivalence.

**Tableau 2 - Résultats partiels pour la trame 1 au temps *t = 900s***

| motif | poids du motif | durée de transmission totale du motif | probabilité du motif |
|---|---|---|---|
| [0. 0. 0. 0] | *(1) $\times$ (0!) $\times$ (3!) = 6* | *0* | *25%* |
| [0. 1. 0. 0] | *(2) $\times$ (1!) $\times$ (2!) = 4* | *4* | *~16.7%* |
| [0. 0. 1. 0] | *(1) $\times$ (1!) $\times$ (2!) = 2* | *5* | *~8.3%* |
| [0. 1. 1. 0] | *(2 $\times$ 1) $\times$ (2!) x (1!) = 4* | *9* | *~16.7%* |
| [0. 2. 0. 0] | *(1) $\times$ (2!) $\times$ (1!) = 2* | *8* | *~8.3%* |
| [0, 2, 1, 0] | *(1 $\times$ 1) $\times$ (3!) $\times$ (0!) = 6* | *13* | *25%* |
| total | *24* | | *100%* |

Il faut répéter le calcul pour tous les instants de la ligne du temps, entre *600* et *1200 exclu* et normaliser les résultats obtenus pour chaque VL par le nombre de trames du VL qui arrivent dans l'intervalle de temps étudié. L'ensemble des étapes est le même pour tous les VL. Il est par ailleurs possible de se limiter aux VL dont les tailles des trames sont différentes, ainsi que les périodes et les dates de démarrage $r_i$ sont différentes. En effet, si deux VL ont même taille de trame, même période et même date de démarrage, les résultats sont alors exactement les mêmes.

La figure unique résume les grandes étapes du procédé d'estimation de la durée de traversée d'un réseau de communication multiplexé à une file d'attente.

**Revendications**

1. Procédé d'estimation déterministe de la distribution de probabilité, pour un intervalle de temps considéré, des durées de traversée, par une trame d'un lien virtuel considéré, d'un commutateur de communication multiplexé à une seule file d'attente FIFO (First In First Out) d'un réseau de communication, plusieurs liens virtuels indépendants les uns des autres arrivant à la file d'attente dudit commutateur, la taille de la mémoire tampon associée à ladite file d'attente étant supérieure ou égale aux besoins, les périodes d'émission de trames de chaque lien virtuel et les durées de transmission de ces trames par ledit commutateur étant constantes, ces constantes pouvant être différentes d'un lien virtuel à un autre, **caractérisé en ce qu'**il comporte l'étape suivante :

   100 : Classement desdites trames en classes d'équivalence selon leur durée de transmission, chaque trame d'une classe d'équivalence étant alors une trame équivalente pour ladite classe.

2. Procédé selon la revendication 1 **caractérisé en ce qu'**il comporte en outre les étapes suivantes :

   200: Calcul de la table des motifs, cette étape comprenant les sous-étapes suivantes :

      230 : génération de l'ensemble des n-uplets constitués des nombres de trames de chaque classe d'équivalence pouvant arriver à un instant quelconque dans la file d'attente dudit commutateur, chaque n-uplet, appelé motif, formant une ligne d'un tableau appelé « table des motifs »,
      270 : calcul, pour chaque motif, de sa durée de transmission totale,

   300 : Calcul de la ligne du temps définie comme étant une séquence de triplets (date, trames arrivées à ladite date, backlog avant l'arrivée des trames à ladite date), où les dates sont tous les instants considérés où arrive au moins une trame dans ledit commutateur, ces instants étant compris dans l'intervalle de temps considéré d'une durée égale au PPCM (Plus Petit Commun Multiple) desdites périodes, et où le backlog est défini comme étant la durée restante nécessaire pour transmettre l'ensemble des trames encore présentes dans ladite file d'attente juste avant ladite date, et pour chacune des dates listées dans la ligne du temps on effectue les étapes 400 à 800 :
   400: Détermination du motif maître principal de la date considérée, défini comme étant le motif de la table des motifs correspondant aux trames arrivées à ladite date, et pour chaque classe d'équivalence représentée dans le motif maître principal on effectue les étapes 500 à 800 :
   500 : Sélection d'une trame équivalente et considération du motif maître par rapport à cette trame équivalente sélectionnée, le motif maître considéré étant égal au motif maître principal dont la composante de la classe d'équivalence de ladite trame équivalente sélectionnée est diminuée d'une unité,
   600: Détermination des motifs esclaves par rapport à la trame équivalente sélectionnée et au motif maître considéré, les motifs esclaves étant des sous-ensembles dudit motif maître considéré, chaque sous-ensemble représentant un cas différent de positionnement devant la trame équivalente sélectionnée, dans ladite file d'attente, de trames équivalentes dudit motif maître considéré,
   700 : Calcul, à l'aide de la ligne du temps et de la table des motifs, de la distribution de probabilité, pour la date considérée, des durées de traversée par la trame équivalente sélectionnée, chacune de ces durées, en abscisse de ladite distribution, valant pour un motif esclave donné et se calculant en ajoutant à la durée d'attente associée au backlog, la somme des durées de transmission des trames dudit motif esclave (c'est-à-dire sa durée totale de transmission) et la durée de transmission de ladite trame équivalente sélectionnée, chacune des probabilités, en ordonnée de ladite distribution, étant égale à la probabilité dudit motif esclave connaissant ladite trame équivalente sélectionnée,
   800: Calcul, pour chaque lien virtuel dont les trames sont de la classe d'équivalence considérée, de la distribution de probabilité, pour la date considérée, des durées de traversée par une trame d'un lien virtuel considéré, chacune de ces distributions de probabilité étant égale à celle calculée à l'étape 700,
   900 : Calcul, pour chaque lien virtuel, de la distribution de probabilité, pour l'intervalle de temps considéré, des durées de traversée par une trame d'un lien virtuel considéré, en faisant la somme, sur toutes les dates de l'intervalle de temps considéré, des distributions de probabilité, pour la date considérée, des durées de traversée par une trame d'un lien virtuel considéré pondérées par l'inverse du nombre total de trames dudit lien virtuel considéré reçues dans la file d'attente dudit commutateur pendant l'intervalle de temps considéré.

**Patentansprüche**

1.  Verfahren zum deterministischen Schätzen der Wahrscheinlichkeitsverteilung, für ein betrachtetes Zeitintervall, der Durchlaufzeiten eines Frames einer betrachteten virtuellen Verbindung eines multiplexierten Kommunikationsschalters mit einer einzigen FIFO-(First In First Out)-Warteschlange eines Kommunikationsnetzes, wobei mehrere virtuelle Verbindungen unabhängig voneinander an der Warteschlange des Schalters ankommen, wobei der mit der Warteschlange assoziierte Pufferspeicher so groß wie oder größer als nötig ist, wobei die Sendeperioden der Frames jeder virtuellen Verbindung und die Sendedauern dieser Frames durch den Schalter Konstanten sind, wobei sich diese Konstanten von einer virtuellen Verbindung zu einer anderen unterscheiden können, **dadurch gekennzeichnet, dass** es den folgenden Schritt beinhaltet:

    100: Klassifizieren der Frames in Äquivalenzklassen gemäß ihrer Sendedauer, wobei jeder Frame einer Äquivalenzklasse dann ein äquivalenter Frame für diese Klasse ist.

2.  Verfahren nach Anspruch 1, **dadurch gekennzeichnet, dass** es ferner die folgenden Schritte beinhaltet:

    200: Berechnen der Mustertabelle, wobei dieser Schritt die folgenden Unterschritte beinhaltet:

    230: Erzeugen des Satzes von Tupeln, der von der Anzahl von Frames jeder Äquivalenzklasse gebildet wird, die zu irgendeinem Zeitpunkt an der Warteschlange des Schalters ankommen können, wobei jedes Tupel, als Muster bezeichnet, eine Zeile einer Tabelle bildet, die als "Mustertabelle" bezeichnet wird;
    270: Berechnen, für jedes Muster, seiner Gesamtsendedauer;

    300: Berechnen der Zeitzeile, definiert als eine Folge von Tripletts (Zeit, zu dieser Zeit angekommene Frames, Backlog vor der Ankunft der Frames zu der Zeit), wobei die Zeiten alle betrachteten Zeitpunkte sind, an denen wenigstens ein Frame in dem Schalter ankommt, wobei diese Zeitpunkte in dem betrachteten Zeitintervall mit einer Dauer vom kgV (kleinstes gemeinsames Vielfaches) der Perioden enthalten sind, und wobei der Backlog als die Restdauer definiert wird, die zum Senden aller Frames nötig ist, die sich unmittelbar vor dieser Zeit noch in der Warteschlange befinden, und für jede der in der Zeitzeile aufgeführten Zeiten Ausführen der Schritte 400 bis 800:
    400: Ermitteln des Master-Hauptmusters der betrachteten Zeit, definiert als das Muster der Mustertabelle entsprechend den zu dieser Zeit angekommenen Frames, und für jede im Master-Hauptmuster gezeigte Äquivalenzklasse Ausführen der Schritte 500 bis 800:
    500: Auswählen eines äquivalenten Frames und Betrachten des Master-Musters in Bezug auf diesen ausgewählten äquivalenten Frame, wobei das betrachtete Master-Muster gleich dem Master-Hauptmuster ist, dessen Komponente der Äquivalenzklasse des gewählten äquivalenten Frames um eine Einheit reduziert ist;
    600: Ermitteln von Slave-Mustern mit Bezug auf den gewählten äquivalenten Frame und das betrachtete Master-Muster, wobei die Slave-Muster Teilmengen des betrachteten Master-Musters sind, wobei jede Teilmenge einen anderen Fall des Positionierens von äquivalenten Frames des betrachteten Master-Musters vor dem gewählten äquivalenten Frame in der Warteschlange repräsentiert;
    700: Berechnen anhand der Zeitzeile und der Mustertabelle der Wahrscheinlichkeitsverteilung, für die betrachtete Zeit, der Durchlaufdauern des gewählten äquivalenten Frames, wobei jede dieser Dauern auf der Abszisse der Verteilung für ein gegebenes Slave-Muster gilt und durch Addieren der Summe der Sendedauern der Frames des Slave-Musters (d.h. seine Gesamtsendedauer) und der Sendedauer des gewählten äquivalenten Frame zu der mit dem Backlog assoziierten Wartedauer berechnet wird, wobei jede der Wahrscheinlichkeiten auf der Ordinate der Verteilung gleich der Wahrscheinlichkeit ist, dass das Slave-Muster den gewählten äquivalenten Frame kennt;
    800: Berechnen für jede virtuelle Verbindung, deren Frames aus der betrachteten Äquivalenzklasse sind, der Wahrscheinlichkeitsverteilung, für die betrachtete Zeit, der Durchlaufdauern eines Frames einer betrachteten virtuellen Verbindung, wobei jede dieser Wahrscheinlichkeitsverteilungen gleich der in Schritt 700 berechneten ist;
    900: Berechnen für jede virtuelle Verbindung der Wahrscheinlichkeitsverteilung, für das betrachtete Zeitintervall, der Durchlaufdauern eines Frames einer betrachteten virtuellen Verbindung durch Summieren, auf allen Zeiten des betrachteten Zeitintervalls, der Wahrscheinlichkeitsverteilung, für die betrachtete Zeit, der Durchlaufdauern eines Frames einer betrachteten virtuellen Verbindung, gewichtet durch die Umkehr der Gesamtzahl von Frames der in der Warteschlange des Schalters während des betrachteten Zeitintervalls empfangenen betrachteten virtuellen Verbindung.

**Claims**

1. A method for the deterministic estimation of the distribution of probability, for a considered time interval, of the pass-through durations of a frame of a considered virtual link of a multiplexed communication switch with a single FIFO (First In First Out) queue of a communication network, with a plurality of virtual links independent of each other arriving at the queue of said switch, the size of the buffer memory associated with said queue being greater than or equal to demand, the periods for transmitting the frames of each virtual link and the transmission durations of these frames by said switch being constants, which constants may differ from one virtual link to another, **characterised in that** it comprises the following step:

   100: classifying said frames into classes of equivalence according to their transmission duration, with each frame of a class of equivalence then being an equivalent frame for said class.

2. The method according to claim 1, **characterised in that** it further comprises the following steps:

   200: calculating the table of patterns, which step comprises the following substeps:

      230: generating a set of n-uplets constituted by the numbers of frames of each class of equivalence that can arrive at any instant in the queue of said switch, each n-uplet, referred to as pattern, forming a line of a table referred to as "table of patterns";
      270: calculating, for each pattern, its total transmission duration;

   300: calculating the line of the time defined as being a sequence of triplets (time, frames that arrived at said time, backlog before the arrival of the frames at said time), where the times are all of the considered instants at which at least one frame arrives in said switch, said instants being included within the considered time interval with a duration equal to the LCM (Least Common Multiple) of said periods, and where the backlog is defined as being the remaining duration needed to transmit all of the frames still present in said queue just before said time, and, for each of the times listed in the time line, carrying out steps 400 to 800:
   400: determining the main master pattern of the considered time, defined as being the pattern of the table of patterns corresponding to the frames that arrived at said time, and, for each class of equivalence shown in the main master pattern, carrying out steps 500 to 800:
   500: selecting an equivalent frame and considering the master pattern in relation to said selected equivalent frame, with the considered master pattern being equal to the main master pattern, for which the component of the class of equivalence of said selected equivalent frame is reduced by one unit;
   600: determining slave patterns in relation to the selected equivalent frame and the considered master pattern, with said slave patterns being sub-sets of said considered master pattern, with each sub-set representing a different case of the positioning in front of the selected equivalent frame, in said queue, of equivalent frames of said considered master pattern;
   700: calculating, using the time line and the table of patterns, the distribution of probability, for the considered time, of the pass-through durations of the selected equivalent frame, with each of these durations, on the abscissa of said distribution, equalling, for a given slave pattern and being calculated by adding to the waiting duration associated with the backlog, the sum of the transmission durations of the frames of said slave pattern (i.e. its total transmission duration) and the duration of transmission of said selected equivalent frame, with each of the probabilities, on the ordinate of said distribution, being equal to the probability of said slave pattern knowing said selected equivalent frame;
   800: calculating, for each virtual link for which the frames are the considered class of equivalence, the distribution of probability, for the considered time, of the pass-through durations of a frame of a considered virtual link, with each of these distributions of probability being equal to that calculated during step 700;
   900: calculating, for each virtual link, the distribution of probability, for the considered time interval, of the pass-through durations of a frame of a considered virtual link, by totalling, on all of the times of the considered time interval, the distributions of probability, for the considered time, of the pass-through durations of a frame of a considered virtual link weighted by the inverse of the total number of frames of said considered virtual link received in the queue of said switch during the considered time interval.

configuration des VL
taille des trames,
périodes, déphasages

calcul de la ligne du temps

calcul de la table des motifs

à répéter pour chaque triplet
(date, trames, *backlog*)

détermination du
motif maître principal
pour cette date

détermination du motif
maître par rapport à
une trame de la classe

détermination des
motifs esclaves par
rapport à la trame

calcul de la distribution
locale des temps de
traversée (pour la trame)

à répéter pour chaque classe
d'équivalence représentée dans
le motif maître principal

propagation des résultats
aux autres trames dans la
même classe d'équivalence

calcul de la distribution
globale des temps de
traversée (pour les VL)

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **R.L. CRUZ.** A calculus for network delays I & II. *IEEE Transaction on Information Theory,* 1991
- **S. MARTIN.** Maîtrise de la dimension temporelle de la qualité de service dans les réseaux. Université Paris XII, 2004
- **K. W. TINDELL ; J. CLARK.** Holistic Schedulability Analysis for Distributed Hard Real-Time Systems. *Euromicro Journal - Special Issue on Parallel Embedded Real-Time Systems,* 1994
- **F. CARCENAC ; F. BONIOL ; Z. MAMMERI.** Verification of an Avionic System Using Timed Model Checking, IsoLA. *First International Symposium on Leveraging Applications of Formal Methods,* 2004
- UPPAAL: now, next, and future. **T. AMNELL et al.** Modeling and verification of parallel processes, 2001. Springer-Verlag New York, Inc, 2001
- **K.L. MCMILLAN.** Symbolic Model Checking. Kluwer Academic Publ, 1993
- **F. CARCENAC.** *Une méthode d'abstraction pour la vérification des systèmes embarqués distribués : application à l'avionique,* 2005
- Minimal schedulability interval for real-time systems of periodic tasks with offsets. **A. CHOQUET-GENIET ; E. GROLLEAU.** Theoretical Computer Science. Elsevier Science Publishers Ltd, 2004, vol. 310, 117-134